# EUROPÄISCHE PATENTSCHRIFT

(11) **EP 2 334 524 B1**
(45) Veröffentlichungstag und Bekanntmachung des Hinweises auf die Patenterteilung: **07.03.2012**
(21) Anmeldenummer: 09778267.6
(22) Anmeldetag: 02.09.2009
(51) Int. Cl.: B60T 7/10, B60T 11/06, B61H 15/00

(54) **PNEUMATISCHE BREMSEINRICHTUNG**
PNEUMATIC BRAKE DEVICE
SYSTÈME DE FREINAGE PNEUMATIQUE

(30) Priorität: 04.09.2008 DE 102008045711
(43) Veröffentlichungstag der Anmeldung: 22.06.2011
(73) Patentinhaber: KNORR-BREMSE Systeme für Schienenfahrzeuge GmbH, 80809 München (DE)
(72) Erfinder: FUDERER, Erich, 82256 Fürstenfeldbruck (DE); STEGMANN, André, 82223 Eichenau (DE)
(74) Vertreter: Mattusch, Gundula
(86) Internationale Anmeldenummer: PCT/EP2009/006341
(87) Internationale Veröffentlichungsnummer: WO 2010/025893

(56) Entgegenhaltungen:
- WO-A1-2006/050770
- US-B1- 6 431 329
- US-B1- 6 443 270

## Beschreibung

Die Erfindung betrifft eine pneumatische Bremseinrichtung nach dem Oberbegriff von Anspruch 1.

Derartige Bremseinrichtungen werden unter anderem bei Schienenfahrzeugen eingesetzt. Dort werden sie häufig zur Betätigung eines Bremsbalkens verwendet, mit dessen Hilfe Bremsklötze an die Radreifen angepresst werden. Solche Bremseinrichtungen sind insbesondere in Drehgestellen von Güterwagen verbaut. Um den Verschleiß der Bremsklötze und der Radreifen kompensieren zu können, ist üblicherweise eine Nachstelleinrichtung mit einer Spindel und einer Verstellmutter vorgesehen. Während des Nachstellvorgangs wird ein Drehen der Verstellmutter zugelassen, während die Spindel drehfest fixiert bleibt. Die Anbindung an den Bremsbalken erfolgt über ein Stellglied, in welchem das freie Ende der Spindel endet. Derartige Bremseinrichtungen sind beispielsweise in der DE 103 04 715 A1 und der DE 103 04 716 A1 beschrieben.

Während des normalen Bremsvorgangs wirkt auf die Spindel ein Drehmoment. Dieses Moment darf jedoch nicht zu einer Verdrehung der Spindel führen, da dies einen ungewollten Verstell-Effekt zur Folge hätte. Die Spindel weist daher üblicherweise einen Spindelzahnring auf, der drehfest mit der Spindel verbunden ist. Mit dem Joch der Bremseinrichtung ist ebenfalls drehfest ein Jochzahnring verbunden. Beide Verzahnungen werden durch eine Druckfeder so gegeneinander vorgespannt, dass sie sich in Eingriff befinden. Während des Bremsvorgangs wird der Spindelzahnring mit hoher Kraft gegen den Jochzahnring gedrückt, so dass das auf die Spindel wirkende Drehmoment abgefangen und in das Joch eingeleitet werden kann.

Muss nach einem Wechsel der Bremsklötze die Nachstelleinrichtung in ihren ursprünglichen Zustand zurückgeführt werden, lässt sich dies durch ein bewusstes Drehen der Spindel erreichen. Dabei ratschen die beiden Zahnringe gegen die Federkraft durch.

Es hat sich herausgestellt, dass die Zahnringe nur dann in Eingriff bleiben, wenn beim Bremsvorgang Druck auf die Spindel ausgeübt wird und die Spindel nach dem Bremsvorgang in ihre Ruhestellung zurück bewegt wird. Ganz anders verhält es sich jedoch wenn beispielsweise die Bremsklötze an den Rädern fest gefroren sind oder die Haltelaschen, an denen die Bremseinrichtung aufgehängt ist, z. B. aufgrund von Korrosion schwergängig geworden sind. Beim Zurückbewegen der Spindel tritt dann eine erhöhte Zugkraft auf, der das mit den Bremsklötzen verbundene Joch nicht folgen kann. In Folge dessen werden die Zahnringe gegen die Kraft der Druckfeder auseinander gezogen. In diesem Zustand kann die Spindel dem auf sie wirkenden Drehmoment nachgeben. Durch die Drehung der Spindel findet ein nicht beabsichtigter Nachstellvorgang statt.

Um dies zu verhindern wurde bereits eine federbelastete Klinke vorgesehen, die das Auseinanderziehen der Zahnringe sicher verhindert. Diese Klinke ist an dem Joch montiert und greift in einen drehfest mit der Spindel verbundenen Rückstellsechskant ein. Soll nun nach einem Wechsel der Bremsklötze die Spindel über den Rückstellsechskant in ihre ursprüngliche Position zurück gedreht werden, muss die Klinke mit einer Hand außer Eingriff gehalten werden, so dass für den Schraubvorgang nur noch die andere Hand zur Verfügung steht. Auch kann es bei dieser Konstruktion zu Korrosionsproblemen kommen, wodurch ein einfaches Abheben der Klinke aus ihrer Sperrposition verhindert wird.

Aus WO 2006/050770 A1 ist ein gattungsgemäßer Spindelantrieb einer elektromechanischen Parkbremse eines Fahrzeugs bekannt an der auf einfache Weise ein Standard-Seilzug mit Nippel mit der Spindel lösbar befestigt werden kann. An einem freien Endabschnitt der Spindel wird ein Kupplungsteil mit einem Aufnahmeabschnitt zur Aufnahme eines Nippels eines Seilzuges mit einem Befestigungsabschnitt vorgesehen, wobei der Befestigungsabschnitt des Kupplungsteils mit dem freien Endabschnitt der Spindel vercrimpt ist.

Der Erfindung liegt die Aufgabe zugrunde, eine pneumatische Bremseinrichtung nach dem Oberbegriff von Anspruch 1 so auszugestalten, dass eine unbeabsichtigte Nachstellung der Bremseinrichtung auch unter Zugeinwirkung sicher verhindert wird. Weiterhin sollen zum Zurückdrehen der Spindel beide Hände zur Verfügung stehen. Auch soll die Gefahr einer Funktionsstörung durch Korrosion vermieden werden.

Gelöst wird die Aufgabe gemäß der Erfindung durch eine pneumatische Bremseinrichtung mit den Merkmalen von Anspruch 1. Vorteilhafte Weiterbildungen und Ausgestaltungen ergeben sich aus den Unteransprüchen.

Erfindungsgemäß sind ein erster und ein zweiter Jochzahnring mit gegeneinander gerichteten Verzahnungen drehfest mit dem Joch verbunden. Ein Spindelzahnring mit beidseitiger Verzahnung ist zwischen den beiden Jochzahnringen fest mit der Spindel verbunden.

Der Spindelzahnring ist dadurch nach beiden Seiten abgesichert. Bei einer Druckbelastung, wie sie während des normalen Bremsvorgangs vorkommt, wird der Spindelzahnring mit großer Kraft auf den ersten Jochzahnring gedrückt. Das auf die Spindel wirkende Drehmoment kann dadurch über den ersten Jochzahnring in das Joch eingeleitet werden. Bei einer Zugbelastung, wie sie z. B. auftritt, wenn die Bremsklötze an den Radreifen fest gefroren sind, wird der Spindelzahnring gegen den zweiten Jochzahnring gedrückt. Auch in diesem Fall wird das auf die Spindel wirkende Drehmoment sicher in das Joch eingeleitet.

Der zweite Jochzahnring ist vorteilhaft axial verschiebbar mit dem Joch verbunden. Durch diese Verschiebbarkeit wird gewährleistet, dass beim Zurückdrehen der Spindel, nach einem Wechsel der Bremsklötze, sich die Zahnringe soweit voneinander entfernen können, dass der Spindelzahnring gegen die drehfest im Joch sitzenden Jochzahnringe verdreht werden kann.

Besonders vorteilhaft sind die beidseitige Verzahnung des Spindelzahnrings und die gegeneinander gerichteten Verzahnungen des ersten und des zweiten Jochzahnrings symmetrisch ausgebildet. Das bedeutet, dass aufeinander zulaufende Zahnflanken im gleichen Winkel angestellt sind. Durch diese Maßnahme ist gewährleistet, dass ein manuelles Verdrehen der Spindel in beide Richtungen erfolgen kann, da sowohl eine Links- als auch eine Rechtsdrehung in gleicher Weise ein Auseinanderdrücken der Verzahnungen bewirkt.

Es ist eine Druckfeder vorgesehen, die sich an dem zweiten Jochzahnring und, direkt oder indirekt, an dem Joch selbst abstützt. Durch diese Feder werden die Zahnringe auch in der Ruhestellung der Bremseinrichtung in Eingriff gehalten. Hierdurch sind die Zahnringe auch bei dem Beginn eines Bremsvorgangs bereits in Eingriff. Ein plötzlich auf die Spindel ausgeübtes Drehmoment kann so sofort aufgefangen werden. Auch in dieser Phase wird folglich ein Verdrehen der Spindel sicher verhindert.

Besonders vorteilhaft ist eine Anschlaghülse vorgesehen, wobei die Druckfeder und die Anschlaghülse ineinander greifen. Bei einer Ausführungsform ist die Anschlaghülse über die Druckfeder geschoben. Bei einer anderen Ausführungsform kann auch die Druckfeder über Anschlaghülse geschoben sein. Bei beiden Ausführungsformen bewirkt diese Anschlaghülse einen genau definierten Anschlag für den zweiten Jochzahnring. In Ruhestellung bildet die Anschlaghülse mit dem zweiten Jochzahnring einen Anschlagspalt, der so dimensioniert ist, dass die Verzahnung zwischen Spindelzahnring und erstem Jochzahnring sowie die Verzahnung zwischen Spindelzahnring und dem zweitem Jochzahnring gemeinsam außer Eingriff gelangen können. Auf diese Weise lässt sich die Spindel zum Zurückschrauben bewusst verdrehen. Wirkt dagegen auf die Spindel eine Zugbelastung, so kann sie dieser Kraft nur solange stattgeben, bis der Anschlagspalt geschlossen ist und der zweite Jochzahnring an der Anschlaghülse anliegt. In dieser Stellung werden die Verzahnung des Spindelzahnrings und die Verzahnung des zweiten Jochzahnrings mit entsprechender Kraft zusammengedrückt, so dass ein Verdrehen der Spindel nicht mehr möglich ist.

In vorteilhafter Weise ist ein Rückstellsechskant einstückig mit dem Spindelzahnring verbunden. Da sowohl der Spindelzahnring als auch der Rückstellsechskant fest auf der Spindel montiert sein müssen, muss bei einer einteiligen Ausführung der beiden Bauteile nur eine Sicherung vorgesehen werden. In einfacher Weise kann hierzu ein Sicherungsstift verwendet werden, der in Bohrungen des Kombinationsbauteils aus Spindelzahnring und Rückstellsechskant sowie der Spindel montiert ist.

Erfindungsgemäß sind der Spindelzahnring und die Jochzahnringe innerhalb des Jochs angeordnet. Die Verzahnungen können dadurch insbesondere vor Verschmutzung geschützt werden, die dazu führen könnten, dass kein sicherer Formschluss zwischen den Zahnringen mehr gewährleistet werden kann. Weiterhin bedingt die Anordnung der Zahnringe innerhalb des Jochs einen Schutz vor Korrosion. Dadurch werden Wartungsarbeiten erleichtert und die Standzeit der Bremseinrichtung erhöht, bzw. die Wartungsintervalle verlängert.

Das Joch weist eine Montageöffnung auf, über die die einzelnen Bauteile in dem Joch montiert werden können. Zum Verschließen dieser Montageöffnung ist vorteilhaft eine Verschlusskappe vorgesehen. Die Verschlusskappe schließt den Innenraum des Jochs ab und bildet damit auch eine Barriere gegen Schmutz und Feuchtigkeit. Gegen diese Verschlusskappe stützt sich die Anschlaghülse ab, so dass die Position des zweiten Jochzahnrings bei einer Zugbelastung der Spindel innerhalb des Jochs fixiert ist.

An der Verschlusskappe ist eine Dichtmanschette vorgesehen. Diese Dichtmanschette kann so ausgeführt sein, dass sie sich an den Außenumfang der Spindel gut anpasst. Damit ist ein Eindringen von Schmutz und Feuchtigkeit in den Innenraum des Jochs über die Verschlusskappe praktisch nicht mehr möglich. In einem besonders vorteilhaften Ausführungsbeispiel ist die Dichtmanschette jedoch als Faltenbalg ausgeführt. Wenn sich dieser Faltenbalg von der Verschlusskappe bis zu der Nachstelleinrichtung erstreckt, ist nicht nur der Innenraum des Jochs, sondern auch die gesamte Spindel und der Spalt zwischen Spindel und Nachstelleinrichtung geschützt.

Gegenüber der Verschlusskappe ist in dem Joch eine Durchtrittsöffnung vorgesehen, durch die der Rückstellsechskant nach außen ragt. An dieser Durchtrittsöffnung des Jochs ist vorteilhaft ein Dichtring vorgesehen. Durch diesen Dichtring wird auch die der Verschlusskappe gegenüberliegende Seite des Jochs gegen das Eindringen von Schmutz und Feuchtigkeit abgedichtet.

Die Verzahnungen der Jochzahnringe sind so synchronisiert, dass beide Jochzahnringe gleichzeitig mit dem Spindelzahnring in Eingriff sein können. Durch diese Maßnahme wird verhindert, dass bei einer Druck- oder Zugbelastung auf die Spindel, der jeweils wirkende Formschluss, zwischen dem Spindelzahnring und dem ersten Jochzahnring bzw. dem zweiten Jochzahnring, erst zustande kommen muss. Auf diese Weise muss auch bei einem Wechsel der Belastung kein Verdrehen der Spindel hingenommen werden. Auch bei einer großen Anzahl von Wechseln zwischen Zug- und Druckbelastung der Spindel kann somit kein unbeabsichtigter Nachstellvorgang stattfinden.

Um die Verdrehsicherung der Jochzahnringe in dem Joch gewährleisten zu können, sind in dem Joch Nuten und an den Jochzahnringen lose oder feste Federn vorgesehen. Beispielsweise können die Jochzahnringe mit festen Federn an ihrem Außenumfang versehen sein, die mit entsprechenden Nuten im Innenraum des Jochs 1 korrespondieren. Bei einer anderen Ausführungsform können die Federn aber auch als lose Scheibenfedem ausgebildet sein, wobei entsprechende Jochnuten im Innenraum des Jochs und Scheibennuten an den Jochzahnringen vorgesehen sind. Die Scheibennuten an den Jochzahnringen sind bei dieser Ausführungsform in der Form eines Halbkreises ausgeführt und so an die Außenkontur der Scheibenfedem angepasst. Die Scheibenfedem können sich dadurch nur zusammen mit den Jochzahnringen gegenüber dem Joch verschieben.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: eine Ansicht des Stellglieds einer erfindungsgemäßen pneumatischen Bremseinrichtung,
- Fig. 2: eine Explosionsdarstellung des Stellglieds aus Fig. 1,
- Fig. 3: einen Schnitt durch das Stellglied in Ruhestellung und
- Fig. 4: einen Schnitt durch das Stellglied unter Zugbelastung

In der Zeichnung wird nur das Stellglied mit den erfindungswesentlichen Teilen der erfindungsgemäßen Bremseinrichtung erläutert. Zylinder, Kolben, Nachstelleinrichtung, Bremsbalken, Bremsklötze, Aufhängelaschen, Feststellvorrichtung usw. sind eingehend in der DE 103 04 715 A1 und der DE 103 04 716 A1 gezeigt und beschrieben.

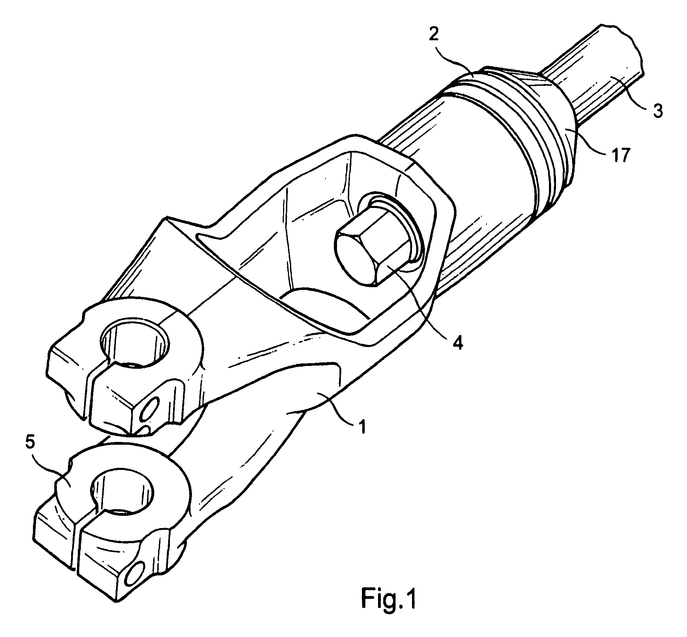

In Fig. 1 ist das Stellglied der erfindungsgemäßen pneumatischen Bremseinrichtung fertig montiert gezeigt. Das Joch 1 ist an seinem einen Ende zangenartig aufgeweitet und mit zwei Befestigungsmuffen 5 versehen. Diese Befestigungsmuffen 5 dienen der Verbindung mit einem Bremsbalken, an dem die Bremsschuhe mit den Bremsklötzen montiert sind. An dem gegenüberliegenden Ende des Jochs 1 befindet sich die Montageöffnung 18 mit der Verschlusskappe 2. An der Verschlusskappe 2 wiederum ist die Dichtmanschette 17 montiert. Die Dichtmanschette 17 legt sich um die Spindel 3 und dichtet so den Innenraum des Jochs 1 nach außen ab. In der Mitte des Jochs ist der aus dem Innenraum herausragende Rückstellsechskant 4 zu sehen.

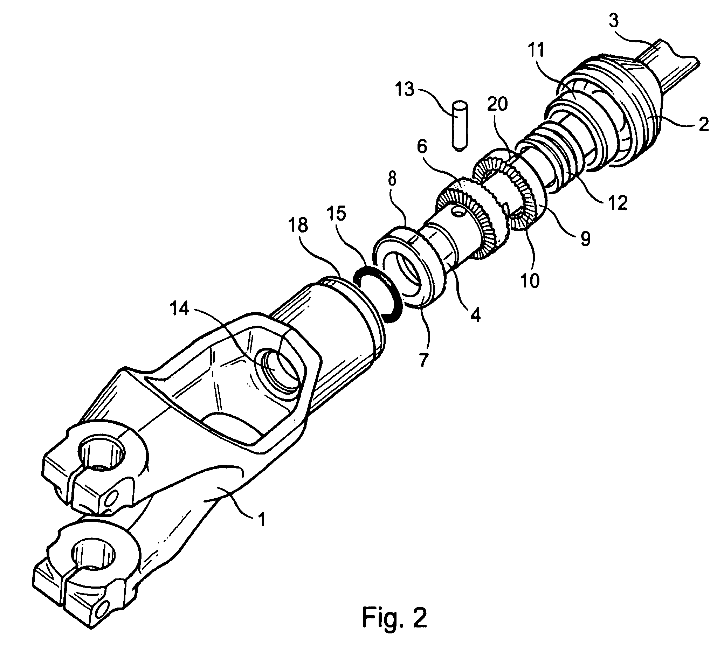

Der genaue Aufbau des Stellglieds geht aus Fig. 2 hervor. Die Explosionsdarstellung zeigt das leere Joch 1 und darüber angeordnet sämtliche Bauteile, die zusammen mit der Spindel 3, in dem Joch 1, über die Montageöffnung 18, montiert werden. Der Dichtring 15 wird so in die Durchtrittsöffnung 14 eingesetzt, dass der Spalt zwischen dem durch die Durchtrittsöffnung 14 ragenden Rückstellsechskant 4 und dem Joch 1, gegen Schmutz und Feuchtigkeit abgedichtet wird. Der erste Jochzahnring 7 weist auf seiner dem Joch 1 abgewandten Seite, eine Verzahnung 8 auf. Dieser erste Jochzahnring 7 weist weiterhin eine Öffnung auf, die so dimensioniert ist, dass sie den Rückstellsechskant 4 aufnehmen kann. Der Rückstellsechskant 4 ist einstückig mit dem Spindelzahnring 6 verbunden und über den Sicherungsstift 13 fest auf der Spindel 3 fixiert. Der Spindelzahnring 6 ist, im Gegensatz zu dem Jochzahnring 7, an beiden Seiten verzahnt.

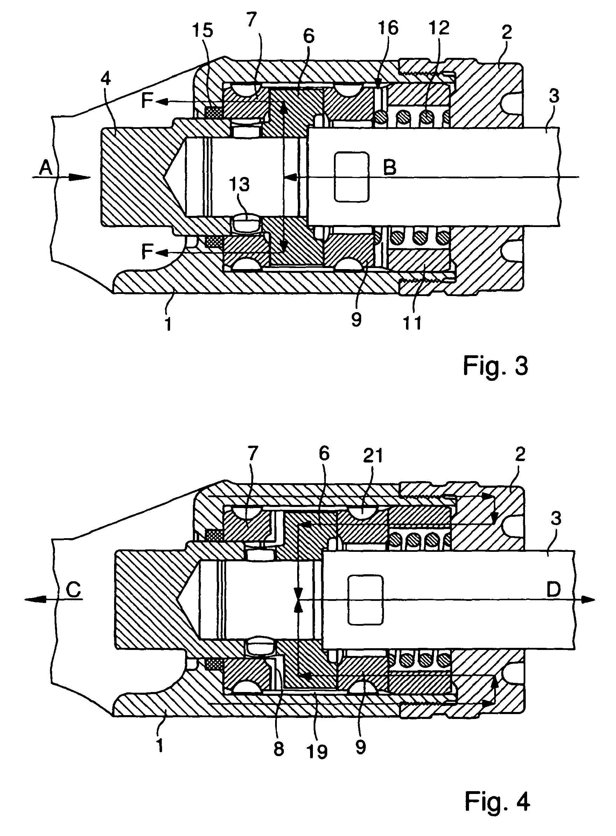

Der zweite Jochzahnring 9 ist identisch zu dem ersten Jochzahnring 7 aufgebaut. Er wird lediglich um 180° gedreht eingebaut, so dass seine Verzahnung 10 zu dem Joch 1 hin gerichtet ist. Der Innenraum des Jochs 1 und die beiden Jochzahnringe 7 und 9 sind so aufeinander abgestimmt, dass eine Drehung der Jochzahnringe 7 und 9 innerhalb des Jochs 1 nicht möglich ist. Beispielsweise können die Jochzahnringe 7 und 9 mit Federn versehen sein, die mit entsprechenden Nuten im Innenraum des Jochs 1 korrespondieren. Bei dem hier gezeigten Ausführungsbeispiel sind die Federn als lose Scheibenfedem 21 (siehe Fig. 4) ausgebildet, wobei entsprechende Jochnuten 19 im Innenraum des Jochs 1 vorgesehen sind. Die Scheibennuten 20 an den Jochzahnringen 7 und 9 sind hier in der Form eines Halbkreises an die Außenkontur der Scheibenfedem 21 angepasst.

Angrenzend an den zweiten Jochzahnring 9 ist die Druckfeder 12 auf die Spindel 3 aufgeschoben. In fertig montiertem Zustand stützt sich die Druckfeder 12 an der Verschlusskappe 2 ab und drückt den zweiten Jochzahnring 9 gegen den Spindelzahnring 6 und diesen, zusammen mit der fest verbundenen Spindel 3, gegen den ersten Jochzahnring 7. Die Anschlaghülse 11 wird über die Druckfeder 12 geschoben und stützt sich ebenfalls an der Verschlusskappe 2 ab.

Die Funktion des Stellglieds soll anhand der Fig. 3 und 4 erläutert werden. Fig. 3 zeigt dabei das Stellglied während des Bremsvorgangs. In diesem Zustand wirkt auf die Spindel 3 eine Druckkraft in Richtung des Pfeils B. Sobald nun die Bremsklötze an dem Radreifen anliegen, wirkt auf das Joch 1 eine entgegengesetzte Druckkraft in Richtung des Pfeils A. Der Spindelzahnring 6, der so auf der Spindel montiert ist, dass weder eine Drehung noch eine axiale Verschiebung gegenüber der Spindel 3 möglich ist, wird gegen den ersten Jochzahnring 7 gedrückt, der in axialer Richtung an dem Joch 1 anliegt und drehfest in diesem eingebaut ist. Durch den Formschluss der beiden gegeneinander gerichteten Verzahnungen des ersten Jochzahnrings 7 und des Spindelzahnrings 6 wird somit eine Drehung der Spindel 3 verhindert. Ein auf die Spindel 3 wirkendes Drehmoment wird dabei über den Spindelzahnring 6 und den ersten Jochzahnring 7 in das Joch 1 eingeleitet.

Die gleiche Stellung ergibt sich auch, wenn sich das Stellglied in Ruhestellung befindet. Da die Druckfeder 12 zwischen der fest mit dem Joch 1 verbundenen Verschlusskappe 2 und dem zweiten Jochzahnring 9 eingespannt ist, wird der zweite Jochzahnring 9 gegen den Spindelzahnring 6 gedrückt. Das Joch 1 wird dagegen, über die an der Verschlusskappe 2 angreifende Druckfeder 12, in die andere Richtung gedrückt. So kommen auch, durch die Druckfeder 12 in der Ruhestellung des Stellglieds, der Spindelzahnring 6 und der erste Jochzahnring 7 in Eingriff.

Soll beispielsweise nach einem Wechsel der Bremsklötze die Spindel 3 zurückgedreht werden, so wird mit einem entsprechenden Schlüssel an dem Rückstellsechskant 4 angesetzt. Bei einem auf den Rückstellsechskant 4 wirkenden Drehmoment, dreht sich sowohl die Spindel 3 als auch der einstückig mit dem Rückstellsechskant 4 verbundene Spindelzahnring 6. Dabei müssen die drei Zahnringe, gegen die Kraft der Druckfeder 12, soweit auseinander gedrückt werden, dass die Verzahnungen frei werden und sich der Spindelzahnring 6 gegen die beiden Jochzahnringe 7 und 9 verdrehen kann. Zu diesem Zweck ist der Anschlagspalt 16 zwischen dem zweiten Jochzahnring 9 und der Anschlaghülse 11 vorgesehen. Dieser Anschlagspalt 16 ist so dimensioniert, dass das Ausrücken der Verzahnungen möglich ist.

Fig. 4 zeigt das Stellglied, wenn ein Bremsklotz beispielsweise an dem Radreifen fest gefroren ist oder die Aufhängelaschen für die Bremseinrichtung durch Korrosion schwergängig geworden sind. Beim Lösen der Feststellbremse oder nach dem Bremsvorgang, wenn das Stellglied in seine Ruhestellung zurückgeführt werden soll, wirkt an dem Joch 1 eine Zugkraft in Richtung des Pfeils C, die diese Rückbewegung des Jochs 1 verhindert oder zumindest erschwert. Gleichzeitig wirkt an der Spindel 3 eine entgegengesetzte Zugkraft in Richtung des Pfeils D. Hierdurch werden der erste Jochzahnring 7 und der Spindelzahnring 6 auseinander gezogen. Damit ist über diese Verzahnung keine Drehsicherung für die Spindel 3 mehr gewährleistet.

Der Spindelzahnring 6 befindet sich aber weiterhin in Eingriff mit dem zweiten Jochzahnring 9, da dieser durch die Druckfeder 12 gegen den Spindelzahnring 6 gedrückt wird. Während das Joch 1 in seiner Stellung verharrt, bewegt sich die Spindel 3 so lange in Richtung des Pfeils D, bis der Anschlagspalt 16 (siehe Fig. 3) geschlossen ist. In dieser Position wird der axialverschiebliche zweite Jochzahnring 9 zwischen dem Spindelzahnring 6 und der Anschlaghülse 11 eingeklemmt. In diesem hier gezeigten Zustand wird das auf die Spindel 3 wirkende Drehmoment, über den Spindelzahnring 6 und den zweiten Jochzahnring 9, in das Joch 1 übertragen.

Die komplette Mechanik des Stellglieds ist in dem Innenraum des Jochs 1 untergebracht. Der Dichtring 15 und die Dichtmanschette 17 verhindern ein Eindringen von Schmutz und Feuchtigkeit. Auf diese Weise ist eine lange Standzeit des Stellglieds gewährleistet.

### Bezugszeichenliste:

- 1: Joch
- 2: Verschlusskappe
- 3: Spindel
- 4: Rückstellsechskant
- 5: Befestigungmuffe
- 6: Spindelzahnring
- 7: erster Jochzahnring
- 8: Verzahnung des ersten Jochzahnrings
- 9: zweiter Jochzahnring
- 10: Verzahnung des zweiten Jochzahnrings
- 11: Anschlaghülse
- 12: Druckfeder
- 13: Sicherungsstift
- 14: Durchtrittsöffnung
- 15: Dichtring
- 16: Anschlagspalt
- 17: Dichtmanschette
- 18: Montageöffnung
- 19: Jochnut
- 20: Scheibennut
- 21: Scheibenfeder

## Patentansprüche

1. Pneumatische Bremseinrichtung mit einer in Axialrichtung bewegbaren Spindel (3) und einem Joch (1), an dem die Spindel (3) so abgestützt ist, dass eine Drehung der Spindel (3) verhindert wird, **dadurch gekennzeichnet, dass** ein erster (7) und ein zweiter Jochzahnring (9) mit gegeneinander gerichteten Verzahnungen (8; 10) drehfest mit dem Joch (1) verbunden sind und dass mit der Spindel (3) zwischen den beiden Jochzahnringen (7; 9) fest ein Spindelzahnring (6) mit beidseitiger Verzahnung verbunden ist.

2. Pneumatische Bremseinrichtung nach Anspruch 1, **dadurch gekennzeichnet, dass** der zweite Jochzahnring (9) axial verschiebbar mit dem Joch (1) verbunden ist.

3. Pneumatische Bremseinrichtung nach Anspruch 2, **dadurch gekennzeichnet, dass** die beidseitige Verzahnung des Spindelzahnrings (6) und die gegeneinander gerichteten Verzahnungen (8; 10) des ersten (7) und des zweiten Jochzahnrings (9) symmetrisch ausgebildet sind.

4. Pneumatische Bremseinrichtung nach Anspruch 3, **dadurch gekennzeichnet, dass** eine Druckfeder (12) vorgesehen ist, die sich an dem zweiten Jochzahnring (9) und, direkt oder indirekt, an dem Joch (1) selbst abstützt.

5. Pneumatische Bremseinrichtung nach Anspruch 4, **dadurch gekennzeichnet, dass** eine Anschlaghülse (11) vorgesehen ist, wobei die Anschlaghülse (11) und die Druckfeder (12) ineinander greifen.

6. Pneumatische Bremseinrichtung nach Anspruch 1, **dadurch gekennzeichnet, dass** ein Rückstellsechskant (4) einstückig mit dem Spindelzahnring (6) verbunden ist.

7. Pneumatische Bremseinrichtung nach Anspruch 1, **dadurch gekennzeichnet, dass** der Spindelzahnring (6) und die Jochzahnringe (7; 9) innerhalb des Jochs (1) angeordnet sind.

8. Pneumatische Bremseinrichtung nach Anspruch 7, **dadurch gekennzeichnet, dass** zum Verschließen einer Montageöffnung (18) des Jochs (1) eine Verschlusskappe (2) vorgesehen ist.

9. Pneumatische Bremseinrichtung nach Anspruch 8, **dadurch gekennzeichnet, dass** an der Verschlusskappe (2) eine Dichtmanschette (17) vorgesehen ist.

10. Pneumatische Bremseinrichtung nach Anspruch 7, **dadurch gekennzeichnet, dass** an einer Durchtrittsöffnung (14) des Jochs (1) ein Dichtring (15) vorgesehen ist.

11. Pneumatische Bremseinrichtung nach Anspruch 1, **dadurch gekennzeichnet, dass** die Verzahnungen (8; 10) der Jochzahnringe (7; 9) so synchronisiert sind, dass beide Jochzahnringe (7; 9) gleichzeitig mit dem Spindelzahnring (6) in Eingriff bringbar sind.

12. Pneumatische Bremseinrichtung nach Anspruch 1, **dadurch gekennzeichnet, dass** in dem Innenraum des Jochs (1) Nuten (19) und an den Jochzahnringen (7; 9) lose (21) oder feste Federn vorgesehen sind.

## Claims

1. A pneumatic brake device having a spindle (3) moveable in an axial direction and a yoke (1), against which the spindle (3) is braced so that a rotation of the spindle (3) is prevented, **characterized in that** a first yoke toothed ring (7) and second yoke toothed ring (9) having opposing toothing systems (8; 10) are rotationally fixed to the yoke (1) and that a spindle toothed ring (6) having a bilateral toothing system is firmly connected to the spindle (3) between the two yoke toothed rings (7; 9).

2. The pneumatic brake device as claimed in claim 1, **characterized in that** the second yoke toothed ring (9) is connected to the yoke (1) in such a way that it is axially displaceable.

3. The pneumatic brake device as claimed in claim 2, **characterized in that** the bilateral toothing system of the spindle toothed ring (6) and the opposing toothing systems (8; 10) of the first yoke toothed ring (7) and second yoke toothed ring (9) are of symmetrical design.

4. The pneumatic brake device as claimed in claim 3, **characterized in that** a compression spring (12), which is braced against the second yoke toothed ring (9) and directly or indirectly against the yoke (1) itself, is provided.

5. The pneumatic brake device as claimed in claim 4, **characterized in that** a stop sleeve (11) is provided, the stop sleeve (11) and the compression spring (12) intermeshing with one another.

6. The pneumatic brake device as claimed in claim 1, **characterized in that** a readjustment hexagon (4) is integrally connected to the spindle toothed ring (6).

7. The pneumatic brake device as claimed in claim 1, **characterized in that** the spindle toothed ring (6) and the yoke toothed rings (7; 9) are located inside the yoke (1) .

8. The pneumatic brake device as claimed in claim 7, **characterized in that** a closure cap (2) is provided for closing a fitting aperture (18) of the yoke (1).

9. The pneumatic brake device as claimed in claim 8, **characterized in that** a sealing collar (17) is provided on the closure cap (2).

10. The pneumatic brake device as claimed in claim 7, **characterized in that** a sealing ring (15) is provided on a passage aperture (14) of the yoke (1).

11. The pneumatic brake device as claimed in claim 1, **characterized in that** the toothing systems (8; 10) of the yoke toothed rings (7; 9) are synchronized so that both yoke toothed rings (7; 9) can be made to mesh simultaneously with the spindle toothed ring (6).

12. The pneumatic brake device as claimed in claim 1, **characterized in that** grooves (19) are provided in the internal space of the yoke (1) and loose springs (21) or fixed springs are provided on the yoke toothed rings (7; 9) .

## Revendications

1. Dispositif de freinage pneumatique comprenant une broche (3) mobile le long du sens axial et une travée (1), à laquelle ladite broche s'appuie d'une telle manière, qu'une révolution de ladite broche (3) soit empêchée, **caractérisé en ce qu'**une première couronne dentée de travée (7) et une deuxième couronne dentée de travée (9) aux dentures (8; 10) orientées l'une en opposition à l'autre, qui sont reliées à ladite travée de façon à tourner avec la dernière, et **en ce qu'**une couronne dentée de broche (6) à dentures des deux côtés est reliée, de manière fixe, avec ladite broche (3) entre lesdites deux couronnes dentées de travées (7; 9).

2. Dispositif de freinage pneumatique selon la revendication 1, **caractérisé en ce que** ladite deuxième couronne dentée de travée (9) est reliée à ladite travée (1) pour un déplacement axial.

3. Dispositif de freinage pneumatique selon la revendication 2, **caractérisé en ce que** ladite denture des deux côtés de ladite couronne dentée de broche (6) et lesdites dentures (8; 10) orientées l'une en opposition à l'autre de ladite première couronne dentée de travée (7) et de ladite couronne dentée de travée (9) présentent une configuration en symétrie.

4. Dispositif de freinage pneumatique selon la revendication 3, **caractérisé en ce qu'**un ressort de compression (12) est disposé, qui s'appuie soi-même à ladite deuxième couronne dentée de travée (9) et directement ou indirectement à ladite travée (1) soi-même.

5. Dispositif de freinage pneumatique selon la revendication 4, **caractérisé en ce qu'**une douille d'arrêt (11) est disposée, à prise de ladite douille d'arrêt (11) et dudit ressort de compression (12) l'un dans l'autre.

6. Dispositif de freinage pneumatique selon la revendication 1, **caractérisé en ce qu'**un élément hexagonal de rappel (4) est relié de façon intégrale avec ladite couronne dentée de broche (69.

7. Dispositif de freinage pneumatique selon la revendication 1, **caractérisé en ce que** ladite couronne dentée de broche (6) et lesdites couronnes dentées de travée (7; 9) sont disposées à l'intérieur de ladite travée (1).

8. Dispositif de freinage pneumatique selon la revendication 7, **caractérisé en ce qu'**un chapeau de fermeture (2) est disposé pour fermer une ouverture de montage (18) de ladite travée (1).

9. Dispositif de freinage pneumatique selon la revendication 8, **caractérisé en ce qu'**une garniture cylindrique d'étanchéité (17) est disposée audit chapeau de fermeture (2).

10. Dispositif de freinage pneumatique selon la revendication 7, **caractérisé en ce qu'**un anneau d'étanchéité est disposé à une ouverture de passage (14) de ladite travée (1).

11. Dispositif de freinage pneumatique selon la revendication 1, **caractérisé en ce que** lesdites dentures (8; 9) desdites couronnes dentées de travée (7; 9) se trouvent en un tel synchronisme l'une par rapport à l'autre, qu'on puisse mettre lesdites deux couronnes dentées de travée (7; 9) en prise dans ladite couronne dentée de broche (6) au même temps.

12. Dispositif de freinage pneumatique selon la revendication 1, **caractérisé en ce que** des rainures (19) sont formées dans l'intérieur de ladite travée (1), pendant que des ressorts amovibles (21) ou fixes sont disposés auxdites couronnes dentées de travée (7; 9).
